# EUROPÄISCHE PATENTSCHRIFT

(11) **EP 0 496 217 B1**
(45) Veröffentlichungstag und Bekanntmachung des Hinweises auf die Patenterteilung: **12.04.1995**
(21) Anmeldenummer: 92100312.5
(22) Anmeldetag: 10.01.1992
(51) Int. Cl.: F24J 2/20, F24J 2/50, B29C 51/00

(54) **Absorberkörper mit Strömungswegen für Wasser oder einen strömbaren Wärmeträger sowie Verfahren zu dessen Herstellung**
Absorber with conduits for conveying water or other liquid working fluid and process for manufacturing same
Absorbeur avec conduits de circulation d'eau ou autre liquide caloporteur et procédé pour sa fabrication

(30) Priorität: 22.01.1991 DE 4101664; 29.01.1991 DE 4102511
(43) Veröffentlichungstag der Anmeldung: 29.07.1992
(73) Patentinhaber: Colux Gesellschaft für Licht- und Leichtbau mbH, D-78224 Singen (DE)
(72) Erfinder: Lechner, Rudolf, D-7700 Singen (DE)
(74) Vertreter: Hiebsch, Gerhard F., Dipl.-Ing.

(56) Entgegenhaltungen:
- EP-A- 0 153 681
- DE-A- 2 620 465
- DE-A- 3 122 856
- US-A- 4 858 594

## Beschreibung

Die Erfindung betrifft einen Absorberkörper mit Strömungswegen für Wasser oder einem strömbaren Wärmeträger zur direkten oder indirekten Erwärmung von Flüssigkeit/en od.dgl. Strömungsmittel durch Sonnenenergie, bei dem die Strömungswege durch das Verformen von Kunststoff erzeugt sind. Zudem erfaßt die Erfindung ein zur Herstellung des Absorberkörpers besonders geeignetes Verfahren.

Bei sog. Sonnenheizungen werden Energiespeicher eingesetzt, die beispielsweise aus Kautschukmatten bestehen, in denen rohrartige Strömungsbahnen kaltes Wasser aus einem Vorlaufrohr aufnehmen und in diesen Strömungsbahnen -- unter Erwärmung durch Sonneneinstrahlung -- zu einem Rücklauf leiten. Derartige Absorber werden vor allem zum direkten Wärmen von Schwimmbadwasser eingesetzt, das üblicherweise mittels Pumpen umgewälzt wird.

Im Gegensatz zu dieser direkten Erwärmung eines Brauchwassers bedarf es bei indirekten Systemen eines flüssigen Wärmeträgers wie -- gegebenenfalls mit Frostschutzmittel gemischten -- Wasser, der/das flächige Rohrsystem in geschlossenem Kreislauf durchströmt sowie in einem Wärmetauscher seine Energie unter Hinnahme von Verlusten an einen angrenzenden Brauchwasserkreislauf abgibt.

Solarkollektoren werden zumeist mit einer Neigung -- beispielsweise auf einer Dachebene -- installiert, und ihr Wärmeträger wird mit zunehmender Temperatur zu dem am oberen Ende der Kollektorfläche vorgesehenen Wärmetauscher in natürlichem Kreislauf (Thermosyphon) aufwärts getrieben, um nach Energieentzug wieder abwärts zu gelangen.

Diese der Sonne ausgesetzten Kollektoren können beispielsweise zwischen zwei parallelen Flächen dazu quer verlaufende Trennwände zur Begrenzung des Strömungsweges aufweisen oder aber an eine Fläche angeformte Rohrstücke, deren parallele Mündungen durch jeweils ein Querrohr miteinander verbunden sind, um sie an Vor- und Rücklauf anschließen zu können.

Die eingesetzten Materialien für die Strömungswege sollen witterungsbeständig, temperatur- und chemikalienfest, d.h. alterungsbeständig sein. Der Einfluß der Witterung kann -- insbesondere bei indirekten Systemen für die Dachinstallation -- beispielsweise dadurch gemindert werden, daß man jene aus synthetischem Kautschuk wie polymerisierten Äthylenen und Propylenen hergestellten kanaldurchzogenen Flächengebilde in einem Gehäuse unter eine Glasplatte setzt, die gleichzeitig in diesem Gehäuse einen Wärmestau erzeugt.

Ein Nachteil bekannter Absorbermatten und -körper ist ihre verhältnismäßig aufwendige Herstellung, ein weiterer Mangel besteht bei den direkten Heizsystemen insbesondere für Schwimmbäder darin, daß das Wasser während seines Durchganges durch den Kollektor seine unerwünschte Bakterienfracht zumindest beibehält.

In Kenntnis dieses Standes der Technik hat sich der Erfinder das Ziel gesetzt, einen kostengünstig herstellbaren und langlebigen Absorberkörper zu schaffen.

Letzterer soll zudem in der Lage sein, bakteriologische Verunreinigungen des durchströmenden Wassers od.dgl. zu beseitigen. Zur Lösung dieser Aufgabe führt eine Vorrichtung nach Patentanspruch 1, darüberhinaus die Lehre zur Herstellung eines Absorberkörpers nach dem unabhängigen Verfahrensanspruch.

Eine bevorzugt schwarz eingefärbte Platte oder Deckplatte wird mit -- dem Muster der Strömungswege entsprechenden -- Durchbrüchen versehen sowie mit einer Folie flächig belegt, wonach letztere durch die Durchbrüche hindurch zu Rinnenprofilen oder Folienkanälen verformt und anschließend -- gegebenenfalls auch vorher -- in den zwischen diesen vorhandenen Zonen mit der Deckplatte verbunden. Diese Zonen sollen bevorzugt eben sein, um ein thermisches Verbinden mit Druck- oder Schweißorganen zu begünstigen; dank der ebenen Fläche dieser Schweißzonen kann man für den Schweißvorgang vor allem eine kontinuierliche Schweißmaschine einsetzen, da es für diese Hindernisse oder Stoßkanten nicht gibt, wie sie beispielsweise beim Schweißen einer verformten Folie auf der Platte -- statt der durch diese hindurchreichenden Folienkanäle -- vorhanden wären. Da also das Schweißen -- oder Andrücken bei einem Klebevorgang -- der Folie an der den Folienkanälen abgekehrten Plattenseite erfolgt, ist ein sehr einfaches und kostengünstiges Herstellen solcher Absorberkörper gewährleistet.

Ein weiterer Vorteil ist darin zu sehen, daß verfahrensgemäß die Folie sofort nach dem Tiefziehen, d.h. unter Ausnutzung der Tiefziehtemperatur, ohne Verzögerung verschweißt werden kann.

Von besonderer Bedeutung aber ist die Haltbarkeit des beschriebenen Systems; Scherbeanspruchungen, die zwischen einem Untergrund einerseits und einer auf diesen aufgeschweißten Folie anderseits bei Einwirkung des Druckes des Strömungsmittels negative Auswirkungen haben, können bei der unter die Deckplatte geschweißten Folie keine Schäden hervorrufen, da die Deckplatte für die, durch ihre Durchbrüche hindurch tiefgezogene und bevorzugt mit der Deckplatte fest verbundene, insbesondere verschweißte, Folie ein Widerlager gegen die Druckkräfte bildet.

Als günstig hat es sich erwiesen, die Folie zwischen den rinnenförmigen Ausformungen mit einer Tragplatte zu verschweißen, welche diese Ausformungen überspannt. Dazu kann die Tragplatte -- wie auch jene Deckplatte -- folienseitig mit einer das Schweißen fördernden Schicht verbunden sein.

Um einen zusätzlichen Verbund zwischen den Schichten des Systems zu schaffen, können die Platten im Schweißbereich Bohrungen für Schäfte von Verbindungsorganen aufweisen, welche das beschriebene Verbundsystem kraftschlüssig zusammenfassen.

Eine besondere Ausführung enthält erfindungsgemäß zwei Deckplatten einander entsprechenden Durchbruchmusters, die jeweils mit einer tiefgezogenen Folie versehen und unter Bildung von Rohrquerschnitten aus den Folienverformungen miteinander verbunden sind. Zwischen den beiden Deckplatten mag eine Ausnehmungen aufweisende zusätzlich stabilisierende Zwischenplatte vorgesehen sein, wobei diese Ausnehmungen den Durchbrüchen der Deckplatte/n etwa entsprechen.

Erfindungsgemäß können die Durchbrüche der Deckplatte in Abständen mit teilkreisförmigen Bügelstegen ausgerüstet werden, deren Querschnittsform jener der verformten Abschnitte der Folie entspricht; diese halten die als integrierte Arbeitsform eingesetzte Deckplatte zusammen und können am fertigen Absorberkörper als zusätzliche Versteifungen erhalten bleiben.

Der Absorberaufbau aus der mit Durchbrüchen versehenen Deckplatte, die aus Kunststoff oder Metall bestehen kann, einerseits, und der durch die Deckplatte im Bereich der Durchbrüche hindurchreichenden verformten Folie anderseits gewährleistet einen sicheren Betrieb, da -- wie erörtert --in den Schweißzonen keine Scherkräfte Wirkung entfalten können.

Darüberhinaus wird das thermische Verbinden -- also das Verschweißen oder Schmelzkleben -- der Folie mit der Platte auf deren ebenen Rückseite und damit ohne Hindernisse vollzogen, was den Einsatz kontinuierlicher Schweißverfahren erlaubt. Gleiches gilt für das Aufbringen der die Strömungswege auch begrenzenden Tragplatte, Folie od.dgl. Spannfläche. Zum Verbinden der Folien oder einer Folie mit der Platte kann auch ein Klebevorgang ohne Temperaturänderung durchgeführt werden.

Das System aus der Deckplatte und einer durch sie hindurchgreifend verformten Folie ist in unterschiedliche Ausgestaltungen von Absorbern oder Durchlaufkörpern mit auf der Rückseite vorhandener absorbierender Begrenzung einsetzbar, wie unten noch weitergehend dargestellt.

Die Teilaufgabe, mit dem erfindunsgemäßen Absorberkörper bei direkten Schwimmbadheizungen einen Einfluß auf die Bakterienkulturen nehmen zu können, wird vor allem durch die Auswahl einer Folie aus modifizierten Ethylen-Tetrafluorethylen-Copolymeren erreicht; durch diese -- oder eine entsprechende -- UV-beständige Folie dringt das UV-Licht in den Kollektorinnenraum, was die erwünschte Wirkung zur Folge hat.

Im Rahmen der Erfindung liegt zudem ein Absorberkörper mit einem ihn aufnehmenden Gehäuse, an dessen Rand eine den Absorberkörper überlagernde Deckfolie festgelegt und durch flexible Spannelemente gespannt ist. Ein Gehäuse aus einem rechteckigen Becken mit sich von Beckenrand zu Beckenrand spannender Kunststoffolie offenbart DE-A-35 37 223. Als flexible Spannelemente für die randwärts eingespannte Deckfolie können erfindungsgemäß biegsame Spannstäbe etwa aus Glasfiber dienen, die entweder jeweils beidends in bewegbaren Lagern sitzen oder einends festgelegt und andernends beweglich sind; in jedem Falle ist eine Krümmung des Spannstabes möglich, der dann gegen die Deckfolie drückt und diese synklastisch spannt. Zudem kann die Deckfolie durch wenigstens einen innenliegenden Spannring veränderlicher Bogenlänge etwa parallel zur Befestigungslinie gespannt werden.

Nach einem besonderen Merkmal der Erfindung wird die Deckfolie mittels Spannstäben aufgespannt, die von der Gehäuseaußenseite her bedienbar ausgebildet sind. Dazu ist die Lagerbüchse axial bewegbar in einem Führungsorgan gelagert und stützt sich gegebenenfalls darin gegen einen Kraftspeicher ab, wobei dieses Führungsorgan bevorzugt zylindrisch ausgebildet ist.

Um eine Kompensation von Folienbewegungen zu ermöglichen, soll/en Lagerbüchse und/oder Führungsorgan durch ein axial wirkendes Druckglied beaufschlagbar sein, durch welches die es aufnehmende Gehäusewand durchsetzt und gegebenenfalls als Spannkolben in einem zylinderartigen Element bewegt zu werden vermag. Dieser Spannkolben wirkt mit einem Endanschlag des ein Spanngehäuse bildenden zylindrischen Elementes zusammen und kämmt bevorzugt über ein Außengewinde mit einem Innengewinde des Spanngehäuses, in dem er so auf einfache Weise zu verschieben ist.

Nach einem weiteren Merkmal der Erfindung sind Führungselemente für die Lagerung des Spannstabes vorhanden, welche beim axialen Einschieben des Spannkolbens od.dgl. Organs die Bewegungsbahn des krümmbaren Spannstabes begrenzen. Dabei kann es sich vor allem um Randausnehmungen in Lagerbüchse und/oder Führungsorgan handeln.

Erfindungsgemäß kann die Lagerbüchse schwenkbar gelagert sein, dies gegebenenfalls mittels etwa radialer Bolzen oder Stifte, die in Gleitführungen des umgebenden Lagerelementes eingreifen.

Im Rahmen der Erfindung liegt ein Verfahren zum Herstellen eines Absorberkörpers, bei dem eine Platte mit dem Muster der Strömungswege entsprechenden Durchbrüchen versehen sowie mit einer Folie flächig belegt wird, wonach die Folie durch die Durchbrüche hindurch zu wulstartigen Rinnenprofilen oder Folienkanälen verformt und bevorzugt anschließend in den zwischen diesen entstandenen Schweißzonen mit der Platte verbunden wird. Zudem wird die Foile durch die Durchbrüche hindurch tiefgezogen.

Weitere Merkmale der Erfindung -- insbesondere auch zu einer besonderen Ausführung einer Deckfolie und deren Befestigung -- sind den Unteransprüchen zu entnehmen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf einen Teil eines Absorberkörpers;
- Fig. 2:: einen Querschnitt durch Fig. 1;
- Fig. 3:: einen Querschnitt durch eine andere Ausführung;
- Fig. 4:: die Draufsicht auf einen Teil eines Rohlings zum Herstellen eines Absorberkörpers;
- Fig. 5:: den Querschnitt durch Fig. 4 nach deren Linie V - V;
- Fig. 6:: einen anderen Rohling in Teildraufsicht;
- Fig. 7:: den Querschnitt durch Fig. 6 nach deren Linie VII - VII;
- Fig. 8:: einen gegenüber Fig. 5, 7 vergrößerten Ausschnitt eines Querschnittes durch einen in Herstellung befindlichen Absorberkörper;
- Fig. 9:: ein vergrößertes Detail aus Fig. 8;
- Fig. 10, 11:: Teilquerschnitte durch zwei Ausführungen von Absorberkörpern;
- Fig. 12:: eine Teildraufsicht auf einen anderen Absorberkörper;
- Fig. 13, 14:: teilweise geschnittene Stirnansichten zu Ausführungen nach Fig. 12;
- Fig. 15:: eine Seitenansicht einer anderen Ausführungsform;
- Fig. 16:: eine Schrägsicht auf einen Teil eines weiteren Absorberkörpers;
- Fig. 17:: einen Schnitt durch ein Gehäuse mit Absorberkörper und einer von Spannstäben gehaltener Deckfolie;
- Fig. 18:: Draufsicht auf ein anderes -- teilweise offenes -- Gehäuse;
- Fig. 19:: einen vergrößerten Schnitt durch Fig. 18 nach deren Linie XIX - XIX;
- Fig. 20:: einen Teil der Fig. 19 in geänderter und verkleinerter Ausführung;
- Fig. 21:: einen anderen Teil der Fig. 19 mit einer anderen Lagerung für einen Spannstab;
- Fig. 22:: einen vergrößerten Ausschnitt der Fig. 21;
- Fig. 23:: Draufsichten auf Fig. 22;
- Fig. 24:: die Details der Fig. 22 einer anderen Ausführungsform und in geänderter Betriebsstellung;
- Fig. 25:: einen Teil der Fig. 22 bis 24 in besonderer Ausgestaltung.

Ein flacher Absorber- oder Durchlaufkörper 10 für Brauchwasser, eine Wärmeträgerflüssigkeit oder ein Gas als Wärmeträger einer Kollektoranlage besteht aus einer Deckplatte 12 und einer auf diese aufgeschweißten transluzenten Folie 14 aus UV-durchlässigem sowie UV- und witterungsbeständigem Kunststoff, die mit einer schwarz eingefärbten Trägerplatte 20 mäanderartige Strömungswege 16 der Breite a für das Wasser begrenzt. Die Folie 14 ist im Bereich von Schweißzonen 18 der Breite b an die Tragplatte 20 sowie auf die Deckplatte 12 aufgeschweißt, aus welcher der Grundriß der Strömungswege 16 herausgestanzt oder in anderer Weise entfernt wurde.

Der Werkstoff für die Folie 14 ist bevorzugt ein modifiziertes Ethylen-Tetrafluorethylen-Copolymer; diese flammwidrige Folie 14 ist hochtransparent und witterungsbeständig. Die Lichtdurchlässigkeit im Bereich des sichtbaren

Lichtes beträgt beispielsweise bei einer 100-»m-Folie 94 % bis 97 % (Gesamtlicht), die Transmission im ultravioletten Bereich (320 bis 380 nm) 83 % bis 88 %. Auch ist die Folie 14 sehr gut UV-durchlässig im Spektralbereich der Sonneneinstrahlung. Außerdem ist der genannte Werkstoff der Folie 14 mit einem hohen Absorptionsgrad im Infrarot-Bereich (Wärmerückhaltevermögen) ausgestattet. Sie nimmt kein Wasser auf, ist lösungsmittel und chemikalienbeständig sowie schmutzabweisend.

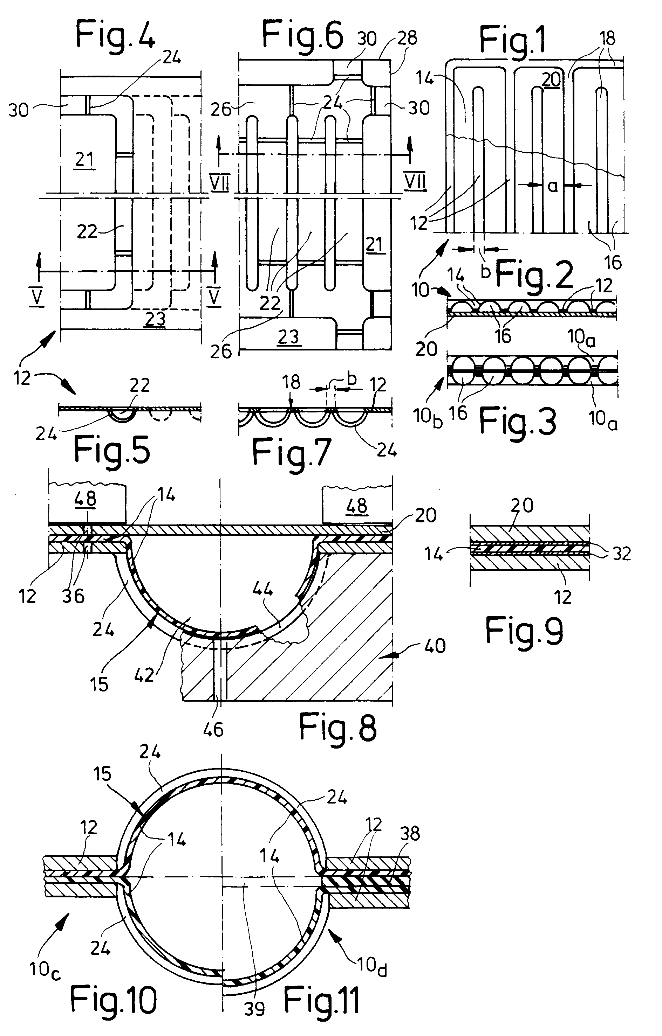

Bei der Ausführung nach Fig. 3 sind zwei Teilkörper 10 -- jeweils ohne Trägerplatte -- mit den Flächen ihrer Deckplatten 12 aufeinandergelegt und miteinander zu einem Durchlaufkörper 10b verbunden worden.

Fig. 4 zeigt einen Teil einer Deckplatte 12 aus Metall oder Kunststoff, in welcher pars pro toto ein in Draufsicht U-förmiger Durchbruch 22 für einen Strömungsweg 16 zu erkennen ist; weitere Durchbrüche sind strichpunktiert angedeutet. Die beiden den Durchbruch 22 begrenzenden Plattenabschnitte 21, 23 sind durch im Querschnitt der Fig. 5 halbkreisartige Bügelstreifen 24 verbunden.

Beim Ausführungsbeispiel der Fig. 6, 7 sind mehrere parallele Durchbrüche 22 zu erkennen, die beidends jeweils in einen -- mit ihnen ein leiterähnliches Muster von Strömungswegen 16 ergebenden -- Querdurchbruch 26 münden. Von beiden Querduchbrüchen 26 gehen an den Ecken der Plattenkanten 28 streifenartige Randausnehmungen 30 aus, welche die Kupplungsmöglichkeiten des mit Hilfe der Deckplatte 12 gebildeten Durchlaufkörpers 10 bestimmen.

Zum Herstellen eines Durchlaufkörpers 10 wird die Deckplatte 12 in eine bei 40 nur angedeutete Tiefziehform eingelegt, welche den späteren Strömungswegen 16 entsprechende Rinnen 42 teilkreisförmigen Querschnitts aufweist sowie daran zusätzlich radial anschließende Einsatznuten 44 für jene Bügelstreifen 24.

Auf die Deckplatte 12 wird eine Folie 14 flächig aufgelegt, das System dann auf Tiefziehtemperatur gebracht und die Folie 14 in die Rinnen 42 tiefgezogen - eine dafür vorgesehene Entlüftungspfeife ist in Fig. 8 mit 46 bezeichnet. Die folienseitig mit einer den Schweißvorgang begünstigenden Schicht 32 (Fig.9) überzogene sowie mit den querschnittlich teilkreisförmigen Folienkanälen 15 ausgestattete Deckplatte 12 wird mittels auf der ebenen Plattenseite angreifender Schweißstempel oder Druckrollen 48 -- bevorzugt aus der Tiefziehtemperatur heraus -- mit der Folie 14 verschweißt.

In Fig. 8 ist vor dem Schweißvorgang noch die erwähnte Tragplatte 20 aufgelegt worden, die ebenfalls schweißgünstig beschichtet ist. Mit 36 sind vorgerichtete Bohrungen in den Platten 12, 20 bezeichnet, dank deren ein zusätzliches Verbinden der Platten 12, 20 durch nicht gezeigte Schrauben oder Nieten vereinfacht wird.

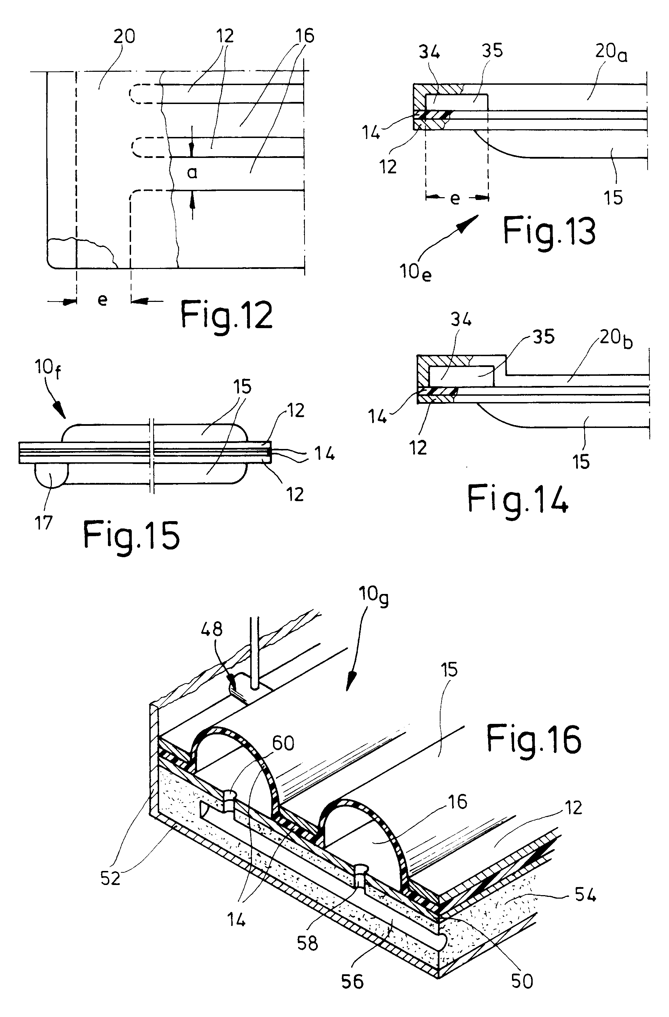

Nach Fig. 10 weist ein Durchlaufkörper 10_{c} zwei folienbehaftete Deckplatten 12 etwa gleichen Durchbruchmusters, Fig. 11 einen Durchlaufkörper 10_{d} mit beidseits einer geschlitzten Zwischenplatte 38 festgelegten Deckplatten 12 mit Folie 14 auf; die Zwischenplatte 38 ist ihrerseits mit Ausnehmungen 39 im Muster der Strömungswege 16 ausgestattet.

Auf einer aus Gründen der Übersichtlichkeit nicht wiedergegebenen Dachfläche od.dgl. sind mehrere der fertigen Durchlaufkörper 10a bis 10d nebeneinander angeordnet und durch --ebenfalls nicht dargestellte -- Kupplungen für das Strömungsmedium dicht verbunden, welche in Stutzenöffnungen sitzen, die aus jenen Randausnehmungen 30 hervorgegangen und so vorgesehen sind, daß eine vielfältige Zuordnung benachbarter Durchlaufkörper 10ₐ bis 10_{d} zueinander möglich ist.

Die Querschnitte der Stutzenöffnungen entsprechen im allgemeinen jenen der anschließenden Folienkanäle 16. Im Falle des Durchlaufkörpers 10e der Fig. 12 bis 14 aber ist die Stutzenöffnung 34 flach, weshalb ihre Breite e größer ist als die Breite a der nachfolgenden -- wie oben beschrieben -- querschnittlich halbkreisförmigen Strömungswege 16.

Um zu verdeutlichen, daß es statt der in den Querdurchbrüchen 26 entstandene Verbindungskanäle 17 (Fig. 15) aus Folie 14 auch möglich ist, in der Tragplatte 20ₐ selbst eine Querverbindung 35 für die dazu rechtwinkeligen Folienkanäle 15 zu schaffen, ist die Folie 14 auch in Fig. 13, 14 überhöht wiedergegeben. Die Tragplatte 20_{b} weist eine Anformung für die Querverbindung 35 auf.

Auf einfache Weise kann ein Durchlaufkörper 10f aus einem unteren Teil mit quer verlaufendem Verbindungskanal 17 an einem Folienabschnitt mit tiefgezogenen Folienkanälen 15 in einer Deckplatte 12 in beschriebener Weise -- auf dieser liegend -- hergestellt werden; auf den ersten Teil wird ein zweiter aufgelegt, der ausschließlich mit Folienkanälen 15 versehen ist. Bei Herstellung des zweiten Teils -- dessen Folienkanäle 15 die des anderen zum rohrartigen Querschnitt ergänzen -- kann auf den Verbindungskanal 17 verzichtet werden; so ist es auch hier möglich, fortlaufend und ohne Stoßhindernisse zu schweißen.

Nach Fig. 16 ist eine Deckplatte 12 aus schwarzem Metall oder einem anderen Strahlen absorbierenden Werkstoff mit einer daran durch Schweißen oder einen Klebevorgang festgelegten, zu Folienkanälen 15 partiell tiefgezogenen Folie 14 sowie einer die Folienkanäle 15 anderseits begrenzenden Spannfolie 50 in einem Kollektorgehäuse 52 angeordnet. Unterhalb der Spannfolie 50 ist eine geschäumte Isolierplatte 54 zu erkennen, welche von wenigstens einem Querkanal 56 zur Verbindung der Strömungswege 16 miteinander und mit einem anderen Durchlaufkörper 10_{g} durchzogen ist. Vom Querkanal 56 gehen Zweigstutzen 58 aus, die an Durchlässen 60 der überhöht dargestellten Spannfolie 50 in den Strömungsweg 16 münden. Bei einer nicht gezeigten Ausführung können solche Durchlässe 60 auch in der Folie 14 vorgesehen und dicht mit einem Querkanal od.dgl. verbunden sein.

Bei 48 ist eine Druckrolle einer Schweißmaschine wiedergegeben, die den beschriebenen Schweißvorgang fortlaufend durchgeführt.

Bei einem nicht dargestellten Ausführungsbeispiel ist die Einheit Deckplatte 12/Folie 14 mit tiefgezogenen Folienkanälen 15 von einer Tragplatte übergriffen, die an den Plattenkanten durch eine Bördelung mit der Deckplatte 12 dicht verbunden ist.

Auch können bei einem Absorberkörper die von der Deckplatte 12 ausgehenden parallelen Folienkanäle 15 durch eine einfache Platte überspannt und durch Querkanäle 56 verbunden sein, die selbst oder über Zweigstutzen 58 in die Folienkanäle 15 eingesetzt sind.

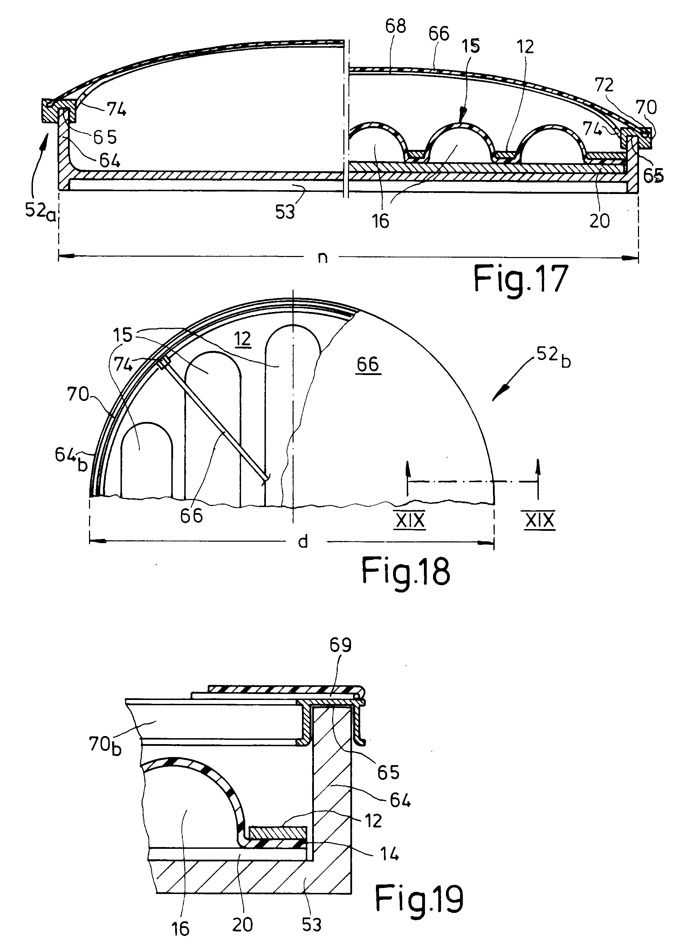

Nach Fig. 17 ruht der beschriebene Durchlauf- oder Absorberkörper 10 in einem Gehäuse 52ₐ, dessen Boden 53 innenseitig die absorbierende -- bevorzugt schwarze -- Schicht anbietet. Dieses Gehäuse 52ₐ der Breite n ist rechteckigen Grundrisses, kann aber in einer Ausführung 52_{b} gemäß Fig. 18 mit einem Durchmesser d auch kreisförmig ausgestaltet sein. Mit den Seitenwänden 64 des Gehäuses 52ₐ oder der ringartigen Gehäusewand 64_{b} des Gehäuses 52_{b} ist jeweils eine Deckfolie 66 aus dem genannten UV-beständigen Werkstoff verbunden und von unten her durch in sich elastische Spannstäbe 68 aus Glasfibermaterial od.dgl. gespannt, die beidends ebenfalls am Gehäuse 52ₐ, 52_{b} festliegen und gegen die Deckfolie 66 drücken. Die Anzahl der Spannstäbe 68 hängt von der Länge des Gehäuses 52ₐ oder dessen Durchmesser d ab.

Zur Verbindung der Spannstäbe 68 und der Deckhaut 66 mit dem Gehäuse 52ₐ, 52_{b} kann ein rinnenartiges Randprofil 70 dienen, das die Oberkante 65 der Seitenwand 64, 64_{b} aufnimmt und an das die Deckfolie 66 -- beispielsweise in einer Kedernut 72 -- angeschlossen ist, die flexiblen, gegebenenfalls in sich längenveränderlichen, unter der Deckhaut 66 gekrümmten Spannstäbe 68 sind beispielsweise in Büchsen 74 eingesetzt.

Bei einem kreisrunden Gehäuse 52_{b} ist nach Fig. 19 die rundum am Randprofil 70_{b} gehaltene Dach- oder Deckhaut 66 mittels eines offenen Spannringes 69 verspannt, der ebenfalls aus jenem flexiblem Werkstoff gefertigt ist.

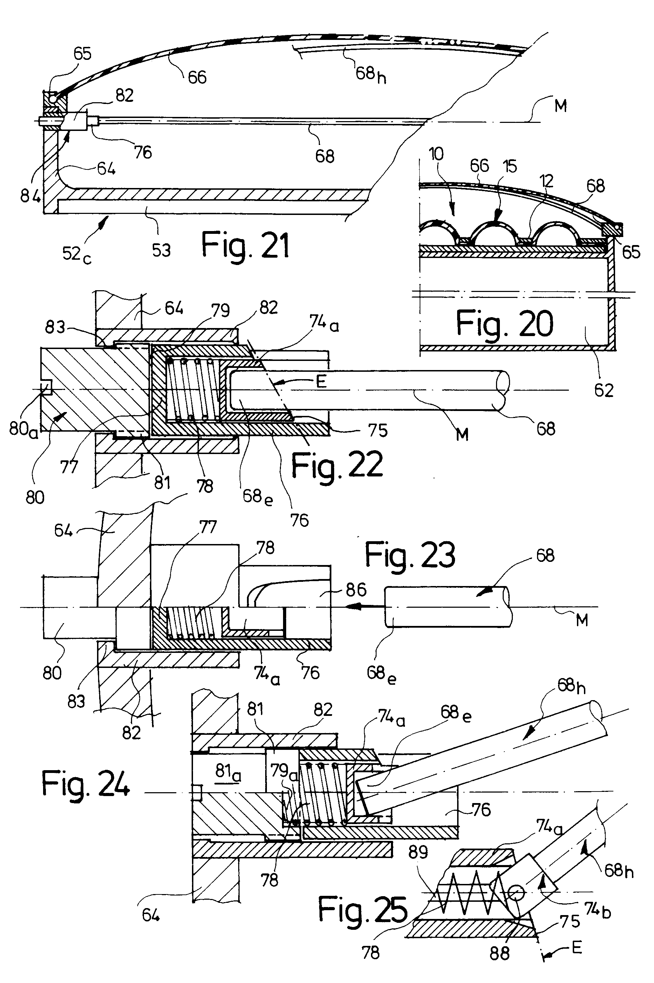

Fig. 20 zeigt den Einsatz eines derartigen Durchlaufkörpers 10 mit gespannter Deckfolie 66 auf einem sich erwärmende Flüssigkeit, insbesondere Wasser, aufnehmenden Becken 62 an.

Die Spannstäbe 68 des Gehäuses 52_{c} der Fig. 21 sind von außen her aus ihrer horizontalen Ruhelage in die bei 68ₕ angedeutete Spannstellung überführbar.

Wie vor allem Fig. 22, 23 verdeutlicht, ist die bereits erwähnte Büchse 74ₐ als Lager für ein Stabende 68ₑ in der horizontalen Stabachse M in einem Führungszylinder 76 verschiebbar und stützt sich gegen eine Feder 78 ab; dank dieser können Folienbewegungen -- etwa temperaturbedingte Ausweitungen -- durch im Nachgeben des Stablagers 74ₐ/78 ausgeglichen werden. Diese Feder 78 stützt sich entweder gegen einen Zylinderboden 77 ab oder -- gemäß Fig. 24 -- bei fehlendem Zylinderboden an der Stirnfläche 79 eines Schraubkolbens 80 bzw. in einer Kaverne 79ₐ der Stirnfläche 79.

Der Schraubkolben 80 lagert mit dem koaxialen Führungszylinder 76 in einem seinerseits zylindrischen Spanngehäuse 82, welches dicht in der Seitenwand 64 sitzt und mit einem endseitigen Anschlagring 83 sowie neben diesem mit einem nicht dargestellten Innengewinde ausgestattet ist. Der Anschlagring 83 ist Bewegungsbegrenzung für einen Gewindekragen 81 jenes Schraubkolbens 80, dessen Außengewinde mit jenem Innengewinde des Spanngehäuses zusammenwirkt. Die Stirn des aus dem Spanngehäuse 82 herausragenden Kolbenkörpers 81ₐ ist mit einem Diagonalschlitz 80ₐ od.dgl. Eingriffseinrichtung für ein Werkzeug versehen, mit dessen Hilfe der Schraubkolben 80 axial verstellt werden kann - und mit diesem der Führungszylinder 76; so kann der Abstand zwischen zwei gegenüberliegenden, einen Spannstab 66 aufnehmenden Spannlagern 84 der beschriebenen Art verändert sowie der Spannstab 66 aus der Ruhelage in seine Spannstellung überführt -- und umgekehrt entspannt -- werden.

Um ein Auslenken des Spannstabes 66 während seines Spannweges hintanzuhalten, kann die Lagerbüchse 74ₐ eine in einer Ebene E geneigte Kante 75 aufweisen (Fig. 22), und der Führungszylinder 76 bietet oberhalb des Spannstabes 66 eine sich axial erstreckende Randausnehmung 86 an, wie dies vor allem Fig. 23 und 24 zeigen.

Fig. 25 gibt eine Lagerbüchse 74_{b} wieder, die mit radialen Seitenstiften 88 in Führungsnuten 89 des Führungszylinders 76 gleitet; auch dieser Lagerbüchse 74_{b} steht unter Einwirkung einer axial wirkenden -- hier spiralartigen -- Feder 78.

Nicht wiedergegeben ist, daß bei einer anderen Ausgestaltung in Ruhelage des Spannstabes 66 dessen Lager auch insgesamt geneigt eingebaut sein kann und zwar so, daß der dann leicht gekrümmte Spannstab 66 mit seinem Maximum unterhalb der Spannebene der Deckfolie 66 bleibt und dann -- wie beschrieben -- in die Spannstellung aufgewölbt wird.

## Patentansprüche

1. Absorberkörper mit Strömungswegen für Wasser oder einen strömbaren Wärmeträger zur direkten oder indirekten Erwärmung von Flüssigkeit/en od.dgl. Strömungsmittel durch Sonnenenergie, bei dem die Strömungswege durch das Verformen von Kunststoff erzeugt sind,
dadurch gekennzeichnet,
daß eine Platte (12) mit schlitzartigen Durchbrüchen (22), deren Weite etwa der Breite (a) des Strömungsweges (16) entspricht, versehen sowie auf der Platte eine Folie (14) angebracht ist, die durch die Durchbrüche hindurch jeweils zu einem Folienformteil (15, 17) etwa rinnenartigen Querschnitts als teilweise Begrenzung des Strömungsweges verformt und auf der dem rinnenförmigen Querschnitt abgekehrten Seite dicht abgedeckt ist.

2. Absorberkörper nach Anspruch 1, dadurch gekennzeichnet, daß auf der dem rinnenartigen Querschnitt des Folienformteils (15, 17) abgekehrten Seite der Platte (12) eine Tragplatte (20) vorgesehen und/oder, daß die Folie (14) an der Platte (12) festgelegt sowie durch deren Durchbrüche (22) hindurch tiefgezogen ist.

3. Absorberkörper nach Anspruch 1 oder 2, dadurch gekennzeichnet, daß die Folie (14) zwischen ihren rinnenförmigen Folienformteilen oder Folienkanälen (15, 17) mit der Platte (12) und/oder mit der Tragplatte (20) verschweißt ist, wobei bevorzugt die Schweißbereiche (18) eben sind.

4. Absorberkörper nach einem der Ansprüche 1 bis 3, dadurch gekennzeichnet, daß die Platte (12, 20, 38) folienseitig mit einer das Schweißen fördernden Schicht (32) versehen ist, und/oder, daß die Platte (12, 20, 38) im Schweißbereich (18) mit Bohrungen (36) für Schäfte von Verbindungsorganen versehen ist.

5. Absorberkörper nach einem der Ansprüche 1 bis 4, dadurch gekennzeichnet, daß zwei jeweils mit einer tiefgezogenen Folie (14) versehene Platten (12) unter Bildung von Rohrquerschnitten aus den Folienformteilen (15, 17) miteinander verbunden sind, wobei gegebenenfalls zwischen den beiden Platten (12) eine Ausnehmungen (39) aufweisende Zwischenplatte (38) vorgesehen ist sowie bevorzugt die Ausnehmungen den Durchbrüchen (22) der Platte/n (12) etwa entsprechen.

6. Absorberkörper nach einem der Ansprüche 1 bis 5, dadurch gekennzeichnet, daß die Durchbrüche (22) der Platte (12) endwärts durch Querdurchbrüche (26) verbunden und diese von einem tiefgezogenen Abschnitt (17) der Folie (14) durchgriffen sind.

7. Absorberkörper nach einem der Ansprüche 1 bis 6, dadurch gekennzeichnet, daß die Folie (14) aus einem UV-beständigen Werkstoff, insbesondere modifiziertem Ethylen-Tetrafluorethylen-Copolymer, hergestellt ist.

8. Absorberkörper nach wenigstens einem der Ansprüche 1 bis 7, dadurch gekennzeichnet, daß ein Teil des Absorberkörpers (10_{f}) mit einem tiefgezogenen Abschnitt (17) als Verbindungskanal für dazu quer verlaufende Folienkanäle oder -ausformungen (15) mit einem anderen Teil verbunden ist, dessen Folienkanäle (15) in den Verbindungskanal des anderen Teiles münden.

9. Absorberkörper nach wenigstens einem der Ansprüche 6 bis 8, dadurch gekennzeichnet, daß der Querdurchbruch (26) mit zu den Kanten (28) der Platte (12) reichenden Randausnehmungen (30) versehen ist, wobei gegebenenfalls die Randausnehmungen (30) Kupplungsbereiche für einen benachbarten Absorberkörper (10, 10ₐ bis 10_{f}) bestimmen.

10. Absorberkörper nach wenigstens einem der Ansprüche 1 bis 9, dadurch gekennzeichnet, daß einer Platte (12) mit Folienkanälen oder -ausformungen (15) eine Tragplatte (20ₐ, 20_{b}) mit integrierter, zu letzteren quer verlaufender Querverbindung (35) für die Folienkanäle zugeordnet ist und/oder, daß die Tragplatten (20, 20ₐ, 20_{b}) mit der an die Folie (14) angeschlossenen Platte (12) durch eine Randbördelung randwärts dicht verbunden ist.

11. Absorberkörper nach wenigstens einem der Ansprüche 1 bis 10, dadurch gekennzeichnet, daS die Platte (12) mit der Folienausformungen (15) aufweisenden Folie (14) einem Isolierkörper (54) zugeordnet ist, wobei gegebenenfalls der Isolierkörper (54) wenigstens eine Querverbindung (56) für die Folienausformungen (15) aufweist.

12. Absorberkörper nach einem der Ansprüche 1 bis 11, dadurch gekennzeichnet, daß die Öffnungen der rinnenartigen Folienausformungen (15) von einer Folie (50) überspannt sind und/oder, daß die Folie (14, 50) von wenigstens einer Querverbindung zugeordneten Strömungswegen (58) durchsetzt ist.

13. Absorberkörper nach wenigstens einem der Ansprüche 1 bis 12, dadurch gekennzeichnet, daß die Durchbrüche (22) der Platte (12) in Abständen mit etwa teilkreisförmigen Bügelstegen (24) versehen sind, deren Querschnittsform jener der Folienformteile (16, 17) der Folie (14) entspricht.

14. Absorberkörper nach wenigstens einem der Ansprüche 1 bis 13, dadurch gekennzeichnet, daß am Rande (65) eines den Absorberkörper (10, 10a bis 10t) aufnehmenden Gehäuses (52a, 52b, 52c) eine den Absorberkörper überlagernde Deckfolie (66) festgelegt und durch flexible Spannelemente gespannt ist.

15. Absorberkörper nach Anspruch 14, dadurch gekennzeichnet, daß die Deckfolie (66) durch bevorzugt längenveränderliche einends festliegende Spannstäbe (68) aus einem flexiblen Strang synklastisch gespannt ist.

16. Absorberkörper nach Anspruch 14 oder 15, dadurch gekennzeichnet, daß die Deckfolie (66) gehäuseseitig an einer kreisförmigen Befestigungslinie festgelegt und gegebenenfalls durch wenigstens einen innenliegenden Spannring (69) veränderlicher Bogenlänge etwa parallel zur Befestigungslinie gespannt ist.

17. Absorberkörper nach Anspruch 15 oder 16, dadurch gekennzeichnet, daß der Spannstab (68) und/oder der Spannring (69) als Spannelement aus einem federnden Strang wie Glasfiber od.dgl. hergestellt sind/ist.

18. Absorberkörper nach einem der Ansprüche 14 bis 17, dadurch gekennzeichnet, daß die Deckfolie (66) mittels Spannstäben (68) spannbar ist, die von der Gehäuseaußenseite her bedienbar ausgebildet sind.

19. Absorberkörper nach wenigstens einem der Ansprüche 14 bis 18, dadurch gekennzeichnet, daß der Spannstab (68) wenigstens mit einem Ende (68e) in einer Büchse (74, 74a) festgelegt und diese in einer Gehäusewand (64) gelagert ist.

20. Absorberkörper nach Anspruch 19, dadurch gekennzeichnet, daß die Lagerbüchse (74a) axial bewegbar in einem Führungsorgan (76) lagert und sich gegebenenfalls darin gegen einen Kraftspeicher (78) abstützt, wobei das Führungsorgan bevorzugt zylindrisch ausgebildet ist.

21. Absorberkörper nach Anspruch 19 oder 20, dadurch gekennzeichnet, daß die Lagerbüchse (74a) und/oder das Führungsorgan (76) durch ein axial wirkendes Druckglied (80) beaufschlagbar ist, das die es aufnehmende Gehäusewand (64) durchsetzt und gegebenenfalls als Spannkolben in einem zylinderartigen Element (82) bewegbar ist.

22. Absorberkörper nach Anspruch 21, dadurch gekennzeichnet, daß der Spannkolhen (80) mit einem Endanschlag (83) des ein Spanngehäuse bildenden zylindrischen Elementes (82) zusammenwirkt und/oder über ein Außengewinde mit einem Innengewinde des Spanngehäuses kämmt.

23. Absorberkörper nach einem der Ansprüche 14 bis 22, gekennzeichnet durch Führungselemente (75, 86) der Lagerung für den Spannstab (68), welche beim axialen Einschieben des Spannkolbens (80) od.dgl. die Bewegungsbahn des krümmbaren Spannstabes begrenzen, insbesondere durch Randausnehmungen (86) in Lagerbüchse (74ₐ) und/oder Führungsorgan (76).

24. Absorberkörper nach wenigstens einem der Ansprüche 19 bis 23, dadurch gekennzeichnet, daß die Lagerbüchse (74_{b}) schwenkbar gelagert ist, gegebenenfalls mittels etwa radialer Bolzen (88) od.dgl. in Gleitführungen (89) des umgebenden Lagerelementes (74ₐ) eingreift.

25. Absorberkörper nach wenigstens einem der Ansprüche 14 bis 24, dadurch gekennzeichnet, daß seine durch Spannstäbe (68) gespannte Deckfolie (66) eine großflächige Überdachung bildet.

26. Verfahren zur Herstellung eines Absorberkörpers nach einem der voraufgehenden Patentansprüche, dadurch gekennzeichnet, daß eine Platte (12) mit dem Muster der Strömungswege entsprechenden Durchbrüchen versehen sowie mit einer Folie (14) flächig belegt wird, wonach die Folie durch die Durchbrüche hindurch zu wulstartigen Rinnenprofilen oder Folienkanälen verformt und anschließend in den zwischen diesen entstandenen Schweißzonen mit der Platte verbunden wird.

27. Verfahren nach Anspruch 26, dadurch gekennzeichnet, daß die Folie durch die Durchbrüche hindurch tiefgezogen wird.

28. Verfahren nach Anspruch 26 oder 27, dadurch gekennzeichnet, daß die Folie (14) durch die Durchbrüche der Platte hindurch tiefgezogen und unmittelbar anschließend unter Ausnutzung der Tiefziehtemperatur verschweißt wird, wobei gegebenenfalls die Folie (14) mit der Platte (12) verklebt wird.

29. Verfahren nach einem der Ansprüche 26 bis 28, dadurch gekennzeichnet, daß die Folie (14) mit der Platte (12) auf eine die Rinnen- oder Folienkanalöffnungen überspannende Trägerplatte aufgeschweißt wird oder, daß Folie (14) und Platte (12) mit einer die Rinnen- oder Folienkanalöffnungen überspannenden Folie thermisch verbunden werden.

## Claims

1. Absorber with conduits for conveying water or another liquid heat transfer medium for the direct or indirect heating of liquid/s or similar flow media by solar energy, in which the conveying conduits are produced by shaping plastic, characterised in that a plate (12) is provided with slot-shaped openings (22), the width of which corresponds approximately to the width (a) of the conveying conduit (16), and a film (14) is applied to the plate (12), said film being shaped into a film part (15, 17) with an approximately channel-shaped cross section through the openings in order to form a partial restriction in the conveying conduit and being sealed on the side remote from the channel-shaped cross section.

2. Absorber according to claim 1, characterised in that a supporting plate (20) is provided on the side of the plate (12) remote from the channel-shaped cross section of the film part (15, 17) and/or that the film (14) is fixed to the plate (12) and is thermoformed through its openings (22).

3. Absorber according to claim 1 or claim 2, characterised in that the film (14) is welded to the plate (12) and/or to the supporting plate (20) between its channel-shaped film parts or film ducts (15, 17), the welded regions (18) preferably being flat.

4. Absorber according to one of claims 1 to 3, characterised in that the plate (12, 20, 38) is provided on the film side with a layer (32) promoting welding and/or that the plate (12, 20, 38) is provided in the welded region (18) with bores (36) for shanks of connecting members.

5. Absorber according to one of claims 1 to 4, characterised in that two plates (12) provided with a thermoformed film (14) are connected together, thereby forming tubular cross sections from the film parts (15, 17), an intermediate plate (38) provided with recesses (39) optionally being provided between the two plates (12) and the recesses preferably corresponding approximately with the openings (22) in the plate/s (12).

6. Absorber according to one of claims 1 to 5, characterised in that the openings (22) in the plate (12) are connected at their ends by transverse openings (26) and these are traversed by a thermoformed portion (17) of the film (14).

7. Absorber according to one of claims 1 to 6, characterised in that the film (14) is made of a UV-resistant material, in particular a modified ethylene tetrafluoroethylene copolymer.

8. Absorber according to at least one of claims 1 to 7, characterised in that part of the absorber (10_{f}) with a thermoformed portion (17) as a connecting duct for film ducts or shaped parts (15) extending transversely thereto is connected to another part, the film ducts (15) of which open into the connecting duct of the other part.

9. Absorber according to at least one of claims 6 to 8, characterised in that the transverse opening (26) is provided with edge recesses (30) extending as far as the edges (28) of the plate (12), the edge recesses (30) optionally defining coupling regions for an adjacent absorber (10, 10ₐ to 10_{f}).

10. Absorber according to at least one of claims 1 to 9, characterised in that a supporting plate (20ₐ, 20_{b}) with an integrated transverse connection (35) for the film ducts extending transversely to the supporting plate is associated with a plate (12) with film ducts or shaped parts (15) and/or that the supporting plate (20, 20ₐ, 20_{b}) is connected in a sealed manner at the edge to the plate (12) connected to the film (14) by means of an edge bead.

11. Absorber according to at least one of claims 1 to 10, characterised in that the plate (12) with the film (14) provided with the shaped parts (15) is associated with an insulating body (54), the insulating body (54) optionally having at least one transverse connection (56) for the shaped parts (15) of the film.

12. Absorber according to one of claims 1 to 11, characterised in that the openings in the channel-shaped film parts (15) are spanned by a film (50) and/or that the film (14, 50) is traversed by conveying conduits (58) associated with at least one transverse connection.

13. Absorber according to at least one of claims 1 to 12, characterised in that the openings (22) in the plate (12) are provided at intervals with approximately circular stirrup-shaped webs (24), the cross-sectional shape of which corresponds to that of the shaped parts (16, 17) of the film (14).

14. Absorber according to at least one of claims 1 to 13, characterised in that a sealing film (66) superimposed upon the absorber is fixed to the edge (65) of a housing (52a, 52b, 52c) receiving the absorber (10, 10a to 10t) and is stretched by flexible clamping elements.

15. Absorber according to claim 14, characterised in that the sealing film (66) is synclastically stretched by preferably longitudinally adjustable clamping bars (68) consisting of a flexible strand fixed at one end.

16. Absorber according to claim 14 or claim 15, characterised in that the sealing film (66) is fixed at the housing side to a circular fixing line and is optionally stretched approximately parallel to the fixing line by at least one internal clamping ring (69) of variable arc length.

17. Absorber according to claim 15 or claim 16, characterised in that the clamping bar (68) and/or the clamping ring (69) in the form of a clamping element is/are made from a resilient strand, such as glass fibre or the like.

18. Absorber according to one of claims 14 to 17, characterised in that the sealing film (66) can be stretched by means of clamping bars (68) which can be operated from the exterior of the housing.

19. Absorber according to at least one of claims 14 to 18, characterised in that the clamping bar (68) is fixed in a bush (74, 74a) at least via one end (68e) and said bush is supported in a housing wall (64).

20. Absorber according to claim 19, characterised in that the bearing bush (74a) is axially movably supported in a guide member (76) and is optionally supported therein against an energy storing device (78), the guide member preferably being cylindrical.

21. Absorber according to claim 19 or claim 20, characterised in that the bearing bush (74a) and/or the guide member (76) can be actuated by an axially operative compression member (80) which traverses the housing wall (64) receiving it and is optionally movable as a chuck piston in a cylindrical element (82).

22. Absorber according to claim 21, characterised in that the chuck piston (80) cooperates with a limit stop (83) of the cylindrical element (82) forming a clamping housing and/or meshes via an external thread with an internal thread of the clamping housing.

23. Absorber according to one of claims 14 to 22, characterised by guide elements (75, 86) for the bearing arrangement for the clamping bar (68) which define the path of motion of the flexible clamping bar during the axial sliding of the chuck piston (80) or the like, in particular by means of edge recesses (86) in the bearing bush (74ₐ) and/or guide member (76).

24. Absorber according to at least one of claims 19 to 23, characterised in that the bearing bush (74_{b}) is pivotally mounted and optionally engages by means of approximately radial bolts (88) or the like in sliding guides (89) in the surrounding bearing element (74ₐ).

25. Absorber according to at least one of claims 14 to 24, characterised in that its sealing film (66) stretched by clamping bars (68) forms a large-surface roof.

26. Process for manufacturing an absorber according to one of the preceding claims, characterised in that a plate (12) is provided with openings corresponding to the pattern of the conveying conduits and is provided with a film (14) as a surface coating, wherein the film is shaped into toric channel profiles or film ducts through the openings and then is connected to the plate in the welded zones produced therebetween.

27. Process according to claim 26, characterised in that the film is thermoformed through the openings.

28. Process according to claim 26 or 27, characterised in that the film (14) is thermoformed through the openings in the plate and is welded immediately afterwards making use of the thermoforming temperature, the film (14) optionally being glued to the plate (12).

29. Process according to one of claims 26 to 28, characterised in that the film (14) and the plate (12) are welded on to a supporting plate spanning the channel or film duct openings or that the film (14) and the plate (12) are thermally connected to a film spanning the channel or film duct openings.

## Revendications

1. Corps absorbant comprenant des voies d'écoulement pour de l'eau ou pour un agent caloporteur pouvant être mis en écoulement, pour l'échauffement direct ou indirect de liquide(s) ou d'agents d'écoulement du même genre par l'énergie solaire, dans lequel les voies d'écoulement sont produites par le formage de matière plastique,
caractérisé en ce que
une plaque (12) est munie de percées (22) de type fente dont la largeur correspond sensiblement à la largeur (a) de la voie d'écoulement (16) et une feuille (14) est placée sur la plaque et est façonnée, à travers les percées, pour former à chaque fois une feuille moulée (15, 17), dont la section transversale présente sensiblement la forme d'une rigole, comme délimitation partielle de la voie d'écoulement et est couverte de façon étanche sur le côté opposé à la section transversale en forme de rigole.

2. Corps absorbant selon la revendication 1, caractérisé en ce que, sur le côté de la plaque (12) opposé à la section transversale en forme de rigole de la feuille moulée (15, 17), il est prévu une plaque-support (20) et/ou en ce que la feuille (14) est fixée sur la plaque (12) et est emboutie à travers les percées (22) de celle-ci.

3. Corps absorbant selon la revendication 1 ou 2, caractérisé en ce que la feuille (14), entre ses préformés de feuille ou canaux de feuille en forme de rigole (15, 17), est assemblée par soudage à la plaque (12) et/ou à la plaque-support (20), les zones de soudage (18) étant de préférence planes.

4. Corps absorbant selon l'une des revendications 1 à 3, caractérisé en ce que la plaque (12, 20, 38) est, côté feuille, munie d'une couche (32) favorisant le soudage et/ou en ce que la plaque (12, 20, 38) est munie, dans la zone de soudage (18), d'alésages (36) destinés à des tiges d'organes de liaison.

5. Corps absorbant selon l'une des revendications 1 à 4, caractérisé en ce que deux plaques (12) munies chacune d'une feuille emboutie (14) sont reliées entre elles avec formation de sections tubulaires à partir des feuilles moulées (15, 17), une plaque intermédiaire (38) présentant des creux (39) étant prévue le cas échéant entre les deux plaques (12), et les creux correspondant de préférence sensiblement aux percées (22) de la plaque / des plaques (12).

6. Corps absorbant selon l'une des revendications 1 à 5, caractérisé en ce que les percées (22) de la plaque (12) sont reliées vers les extrémités, par des percées transversales (26) et en ce que ces percées transversales sont traversées par un tronçon embouti (17) de la feuille (14).

7. Corps absorbant selon l'une des revendications 1 à 6, caractérisé en ce que la feuille (14) est réalisée à partir d'un matériau résistant aux UV, en particulier à partir de copolymère éthylène-tétrafluoréthylène modifié.

8. Corps absorbant selon au moins l'une des revendications 1 à 7, caractérisé en ce qu'une partie du corps absorbant (10f) comprenant un tronçon embouti (17) à titre de canal de liaison pour des canaux de feuille ou des préformés de feuille (15) qui sont disposés transversalement à ce canal de liaison, est reliée à une autre partie dont les canaux de feuille (15) débouchent dans le canal de liaison de l'autre partie.

9. Corps absorbant selon au moins l'une des revendications 6 à 8, caractérisé en ce que la percée transversale (26) est munie de creux marginaux (30) atteignant les arêtes (28) de la plaque (12), les creux marginaux (30) déterminant le cas échéant des zones d'accouplement pour un corps absorbant voisin (10, 10a à 10f).

10. Corps absorbant selon au moins l'une des revendications 1 à 9, caractérisé en ce qu'à une plaque (12) comprenant des canaux de feuille ou des préformés de feuille (15) est associée une plaque-support (20a, 20b) comprenant une liaison transversale (35) intégrée, disposée transversalement à la plaque-support, pour les canaux de feuille et/ou en ce que les plaques-supports (20, 20a, 20b) sont reliées, vers le bord, de façon étanche et par un roulage de bord, à la plaque (12) raccordée à la feuille (14).

11. Corps absorbant selon au moins l'une des revendications 1 à 10, caractérisé en ce que la plaque (12), comprenant la feuille (14) présentant des préformés de feuille (15), est associée à un corps isolant (54), le corps isolant (54) présentant le cas échéant au moins une liaison transversale (56) pour les préformés de feuille (15).

12. Corps absorbant selon l'une des revendications 1 à 11, caractérisé en ce que les ouvertures des préformés de feuille (15) en forme de rigole sont recouvertes d'une feuille (50) et/ou en ce que la feuille (14, 50) est pénétrée par des voies d'écoulement (58) associées au moins à une liaison transversale.

13. Corps absorbant selon au moins l'une des revendications 1 à 12, caractérisé en ce que les percées (22) de la plaque (12) sont munies, à intervalles, d'étriers (24) de forme sensiblement circulaire dont la forme de section transversale correspond à celle des feuilles moulées (16, 17) de la feuille (14).

14. Corps absorbant selon au moins l'une des revendications 1 à 13, caractérisé en ce que, sur le bord (65) d'un logement (52a, 52b, 52c) logeant le corps absorbant (10, 10a à 10t) , une feuille de couverture (66) posée sur le corps absorbant est fixée et est tendue par des éléments tendeurs flexibles.

15. Corps absorbant selon la revendication 14, caractérisé en ce que la feuille de couverture (66) est tendue de manière synclastique par des barres tendeuses (68), de préférence de longueur variable, fixées à une extrémité, et réalisées à partir d'un lien souple.

16. Corps absorbant selon la revendication 14 ou 15, caractérisé en ce que la feuille de couverture (66) est, côté logement, fixée sur une ligne de fixation en forme de cercle et est tendue le cas échéant, sensiblement parallèlement à la ligne de fixation, par au moins un anneau tendeur (69) intérieur, de longueur d'arc variable.

17. Corps absorbant selon la revendication 15 ou 16, caractérisé en ce que la barre tendeuse (68) et/ou l'anneau tendeur (69) est/sont fabriqués sous forme d'un élément tendeur à partir d'un lien élastique tel que de la fibre de verre ou similaire.

18. Corps absorbant selon l'une des revendications 14 à 17, caractérisé en ce que la feuille de couverture (66) peut être tendue au moyen de barres tendeuses (68) qui sont constituées de façon à pouvoir être manipulées depuis le côté extérieur du logement.

19. Corps absorbant selon au moins l'une des revendications 14 à 18, caractérisé en ce que la barre tendeuse (68) est fixée, au moins par une extrémité (68e), dans un coussinet (74, 74a) et en ce que ce coussinet est supporté dans une paroi de logement (64).

20. Corps absorbant selon la revendication 19, caractérisé en ce que le coussinet (74a) repose de façon à pouvoir se déplacer dans le sens axial dans un organe de guidage (76) et s'y appuie éventuellement contre un accumulateur d'énergie (78), l'organe de guidage étant constitué de préférence sous forme cylindrique.

21. Corps absorbant selon la revendication 19 ou 20, caractérisé en ce que le coussinet (74a) et/ou l'organe de guidage (76) peut/peuvent être soumis à un organe de pression (80) à action axiale qui traverse la paroi de logement (64) qui le loge et est/sont éventuellement mobile(s) en tant que piston tendeur dans un élément de type cylindre (82).

22. Corps absorbant selon la revendication 21, caractérisé en ce que le piston tendeur (80) coopère avec une butée (83) de l'élément (82) cylindrique formant un logement tendeur et/ou engrène par le biais d'un filet extérieur avec un filet intérieur du logement tendeur.

23. Corps absorbant selon l'une des revendications 14 à 22, caractérisé par des éléments de guidage (75, 86) du support de la barre tendeuse (68) qui limitent, lors de l'insertion axiale du piston tendeur (80) ou similaire, la trajectoire de la barre tendeuse qui peut se couder, en particulier à travers des creux marginaux (86) dans le coussinet (74a) et/ou l'organe de guidage (76).

24. Corps absorbant selon au moins l'une des revendications 19 à 23, caractérisé en ce que le coussinet (74b) est logé de façon pivotante et engrène le cas échéant, à l'aide de tiges filetées (88), ou similaires, sensiblement radiales, dans des glissières (89) de l'élément-support (74a) voisin.

25. Corps absorbant selon au moins l'une des revendications 14 à 24, caractérisé en ce que sa feuille de couverture (66) tendue par des barres tendeuses (68) constitue une couverture de surface importante.

26. Procédé de fabrication d'un corps absorbant selon l'une des revendications précédentes, caractérisé en ce qu'une plaque (12) est munie de percées correspondant au tracé des voies d'écoulement et est garnie, en nappe, d'une feuille (14), après quoi la feuille est formée, à travers les percées, en profilés de rigole ou en canaux de feuille en forme de bourrelets puis est reliée à la plaque dans les zones de soudage apparues entre ces éléments.

27. Procédé selon la revendication 26, caractérisé en ce que la feuille est emboutie à travers les percées.

28. Procédé selon la revendication 26 ou 27, caractérisé en ce que la feuille (14) est emboutie à travers les percées de la plaque et est soudée immédiatement après en exploitant la température d'emboutissage profond, la feuille (14) étant le cas échéant collée à la plaque (12).

29. Procédé selon une des revendications 26 à 28, caractérisé en ce que la feuille (14) est soudée avec la plaque (12) sur une plaque-support enjambant les ouvertures de canal de rigole ou de canal de feuille ou en ce que la feuille (14) et la plaque (12) sont reliées thermiquement à une feuille enjambant les ouvertures de canal de rigole ou de canal de feuille.
